# EUROPEAN PATENT APPLICATION

(11) **EP 4 582 479 A1**
(43) Date of publication of application: **09.07.2025**
(21) Application number: 23880316.7
(22) Date of filing: 23.10.2023
(51) Int. Cl.: C08L 55/02, C08L 35/04, C08L 35/06, C08L 23/08, C08L 53/00

(54) **THERMOPLASTIC RESIN COMPOSITION**

(30) Priority: 21.10.2022 KR 20220136421
(71) Applicant: LG CHEM, LTD., Seoul 07336 (KR)
(72) Inventor: NAM, Jin Oh, Daejeon 34122 (KR); HAN, Seung Hun, Daejeon 34122 (KR); NAMGUNG, Ho, Daejeon 34122 (KR)
(74) Representative: Plasseraud IP
(86) International application number: PCT/KR2023/016513
(87) International publication number: WO 2024/085741

(57) **Abstract**

The present invention relates to a thermoplastic resin composition including: a base resin including a diene-based graft polymer and a vinyl-based non-grafted polymer including an aromatic vinyl-based monomer unit and a vinyl cyanide-based monomer unit; and an additive including an olefin-based non-grafted polymer including an olefin-based monomer unit, a (meth)acrylate-based monomer unit, and a maleic acid-based monomer unit.

## Description

### [Technical Field]

### Cross-Reference to Related Application

The present invention claims priority to and the benefit of Korean Patent Application No. 10-2022-0136421, filed on October 21, 2022, the entire contents of which are incorporated herein by reference.

### Technical Field

The present invention relates to a thermoplastic resin composition.

### [Background Art]

Diene-based graft polymers include a diene-based rubber polymer and a shell including an aromatic vinyl-based monomer unit and a vinyl cyanide-based monomer unit that are grafted to the diene-based rubber polymer. Compared to high impact polystyrene (HIPS), diene-based graft polymers have excellent physical properties such as high impact resistance, chemical resistance, thermal stability, colorability, fatigue resistance, rigidity, and processability. Due to these physical properties, diene-based graft polymers have been used as parts of automotive interior and exterior materials, office appliances, and various electrical and electronic products or toys.

However, despite these excellent physical properties, cracks occurred when a strong solvent was used to evaluate the chemical resistance of the diene-based graft polymer.

To solve the above problem, research has been conducted to adjust the content of rubber in the diene-based graft polymer or increase the size of the diene-based graft polymer. However, in this case, the fluidity of the diene-based graft polymer was reduced, and there was a limit to the extent to which chemical resistance could be improved due to increased residual stress in thermoplastic resin molded products.

### [Related Art Documents]

### [Patent Documents]

(Patent Document 1) KR2011-0061303A

### [Disclosure]

### [Technical Problem]

The present invention is directed to providing a thermoplastic resin composition with excellent processability, impact resistance, heat resistance, and chemical resistance.

### [Technical Solution]

In order to solve the above-mentioned problems, 1) the present invention provides a thermoplastic resin composition which includes: a base resin including a diene-based graft polymer and a vinyl-based non-grafted polymer including an aromatic vinyl-based monomer unit and a vinyl cyanide-based monomer unit; and an additive including an olefin-based non-grafted polymer including an olefin-based monomer unit, a (meth)acrylate-based monomer unit, and a maleic acid-based monomer unit.
2) According to 1), the present invention provides a thermoplastic resin composition including 0.5 to 5.0 parts by weight of the olefin-based non-grafted polymer based on 100 parts by weight of the base resin.
3) According to 1) or 2), the present invention provides a thermoplastic resin composition, wherein the olefin-based non-grafted polymer is a terpolymer composed of an olefin-based monomer unit, a (meth)acrylate-based monomer unit, and a maleic acid-based monomer unit.
4) According to any one of 1) to 3), the present invention provides a thermoplastic resin composition, wherein the olefin-based non-grafted polymer is an ethylene/ethyl acrylate/maleic anhydride terpolymer.
5) According to any one of 1) to 4), the present invention provides a thermoplastic resin composition, wherein the diene-based graft polymer includes a diene-based rubber polymer and a shell including an aromatic vinyl-based monomer unit and a vinyl cyanide-based monomer unit that are grafted to the diene-based rubber polymer.
6) According to any one of 1) to 5), the present invention provides a thermoplastic resin composition including 10.0 to 40.0 parts by weight of the diene-based graft polymer based on 100 parts by weight of the base resin.
7) According to any one of 1) to 6), the present invention provides a thermoplastic resin composition, wherein the base resin includes a maleimide-based non-grafted polymer including a maleimide-based monomer unit, an aromatic vinyl-based monomer unit, and a maleic acid-based monomer unit.
8) According to 7), the present invention provides a thermoplastic resin composition including 10.0 to 50.0 parts by weight of the maleimide-based non-grafted polymer based on 100 parts by weight of the base resin.
9) According to 7) or 8), the present invention provides a thermoplastic resin composition, wherein the maleimide-based non-grafted polymer is a terpolymer composed of a maleimide-based monomer unit, an aromatic vinyl-based monomer unit, and a maleic acid-based monomer unit.
10) According to any one of 7) to 9), the present invention provides a thermoplastic resin composition, wherein the maleimide-based non-grafted polymer is an N-phenylmaleimide/styrene/maleic anhydride polymer.

### [Advantageous Effects]

A thermoplastic resin composition according to an embodiment of the present invention exhibits excellent processability, impact resistance, heat resistance, and chemical resistance.

### [Modes of the Invention]

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

In the present invention, a diene-based rubber polymer may be prepared by polymerizing, specifically cross-linking, diene-based monomers or monomer mixtures having the diene-based monomer as a main component. The diene-based monomer may be one or more of 1,3-butadiene, isoprene, chloroprene, and piperylene, with 1,3-butadiene being preferred.

In the present invention, an aromatic vinyl-based monomer may be one or more of α-methyl styrene, α-ethyl styrene, p-methyl styrene, 2,4-dimethyl styrene, styrene, p-fluoro styrene, p-chloro styrene, and p-bromo styrene, with styrene being preferred. A unit derived from an aromatic vinyl-based monomer may be an aromatic vinyl-based monomer unit.

In the present invention, a vinyl cyanide-based monomer may be one or more of acrylonitrile, methacrylonitrile, (Z)-3-phenyl acrylonitrile, and α-chloro acrylonitrile, with acrylonitrile being preferred. A unit derived from a vinyl cyanide-based monomer may be a vinyl cyanide-based monomer unit.

In the present invention, an olefin-based monomer may be one or more of ethylene, propylene, and butylene, with ethylene being preferred. A unit derived from an olefin-based monomer may be an olefin-based monomer unit.

In the present invention, a (meth)acrylate-based monomer may be a term encompassing an acrylate-based monomer and a methacrylate-based monomer. The (meth)acrylate-based monomer may be a C₁-C₁₀ alkyl (meth)acrylate-based monomer and one or more of methyl (meth)acrylate, ethyl (meth)acrylate, propyl (meth)acrylate, butyl (meth)acrylate, heptyl (meth)acrylate, hexyl (meth)acrylate, 2-ethylhexyl (meth)acrylate, and decyl (meth)acrylate, with one or more of ethyl acrylate and butyl acrylate being preferred. A unit derived from a (meth)acrylate-based monomer may be a (meth)acrylate-based monomer unit.

In the present invention, a maleimide-based monomer may be one or more of maleimide, N-methyl maleimide, N-ethyl maleimide, N-propyl maleimide, N-isopropyl maleimide, N-butyl maleimide, N-isobutyl maleimide, N-t-butyl maleimide, N-lauryl maleimide, N-cyclohexyl maleimide, N-phenyl maleimide, N-(4-chlorophenyl) maleimide, 2-methyl-N-phenyl maleimide, N-(4-bromophenyl) maleimide, N-(4-nitrophenyl) maleimide, N-(4-hydroxyphenyl) maleimide, N-(4-methoxyphenyl) maleimide, N-(4-carboxyphenyl) maleimide, and N-benzyl maleimide, with N-phenyl maleimide being preferred. A unit derived from a maleimide-based monomer may be a maleimide-based monomer unit.

In the present invention, a maleic acid-based monomer may be one or more of maleic anhydride, maleic acid, maleic acid monoester, and maleic acid diester, with maleic anhydride being preferred. A unit derived from a maleic acid-based monomer may be a maleic acid-based monomer unit.

In the present invention, a grafting rate of diene-based graft polymer may be calculated by the following method.

First, 2 g of a diene-based graft polymer powder is dissolved in 300 ml of acetone while stirring for 24 hours and then separated using a centrifuge to obtain a precipitate. The precipitate is dried at 60 to 120 °C to obtain a dried product. Then, a weight of the dried product is measured, and the measured value is substituted into the equation below. Grafting rate (%) = [(weight of diene-based graft polymer powder (2 g)) - (weight of dried product) - (weight of diene-based rubber polymer)] / (weight of diene-based rubber polymer) × 100

Weight of diene-based rubber polymer: Weight of a diene-based rubber polymer theoretically contained in 2 g of a diene-based graft polymer powder; or weight of a diene-based rubber polymer measured by analyzing 2 g of a diene-based graft polymer powder using infrared spectroscopy.

In the present invention, a weight-average molecular weight of a shell in a diene-based graft polymer may be a weight-average molecular weight of a polymer including an aromatic vinyl-based monomer unit and a vinyl cyanide-based monomer unit that are grafted to a diene-based rubber polymer.

In the present invention, a weight-average molecular weight of a shell in a diene-based graft polymer may be calculated by the following method.

A diene-based graft polymer is dissolved in a tetrahydrofuran (THF) solution (concentration: 1 wt%) and then passed through a 1 µm filter. The weight-average molecular weight of a shell may be measured as a relative value with respect to a standard polystyrene sample by gel permeation chromatography of the material that has passed through the 1 µm filter.

In the present invention, the weight-average molecular weight may be measured as a relative value with respect to a standard polystyrene sample by gel permeation chromatography using tetrahydrofuran as an eluent.

In the present invention, a glass transition temperature may be measured by differential scanning calorimetry.

In the present invention, the average particle diameter may be measured by dynamic light scattering, and specifically, using a Nicomp 380 instrument commercially available from Particle Sizing Systems. In the present invention, the average particle diameter may refer to an arithmetic mean particle diameter in the particle size distribution as measured by dynamic light scattering, that is, an average particle diameter based on a scattering intensity distribution.

### 1. Thermoplastic resin composition

A thermoplastic resin composition according to an embodiment of the present invention includes: 1) a base resin including a diene-based graft polymer and a vinyl-based non-grafted polymer including an aromatic vinyl-based monomer unit and a vinyl cyanide-based monomer unit; and 2) an additive including an olefin-based non-grafted polymer including an olefin-based monomer unit, a (meth)acrylate-based monomer unit, and a maleic acid-based monomer unit.

The base resin may include a maleimide-based non-grafted polymer including a maleimide-based monomer unit, an aromatic vinyl-based monomer unit, and a maleic acid-based monomer unit.

Hereinafter, the components of a thermoplastic resin composition according to an embodiment of the present invention will be described in detail.

### 1) Base resin

### (1) Diene-based graft polymer

A diene-based graft polymer is a component that improves the impact resistance, tensile force, and stress of the thermoplastic resin composition.

The diene-based graft polymer may include a diene-based rubber polymer and a shell including an aromatic vinyl-based monomer unit and a vinyl cyanide-based monomer unit that are grafted to the diene-based rubber polymer. The shell may also include an aromatic vinyl-based monomer unit and a vinyl cyanide-based monomer unit that are not grafted to the diene-based rubber polymer.

The diene-based rubber polymer may have an average particle diameter of 50 to 500 nm, preferably 70 to 470 nm. When this condition is satisfied, both the impact resistance and surface characteristics of the diene-based graft polymer may be improved.

An amount of the diene-based rubber polymer in the diene-based graft polymer may be 40.0 to 80.0 wt%, preferably 50.0 to 70.0 wt%. When this condition is satisfied, the impact resistance of the diene-based graft polymer may be further improved.

An amount of the aromatic vinyl-based monomer unit in the diene-based graft polymer may be 10.0 to 50.0 wt%, preferably 20.0 to 40.0 wt%. When this condition is satisfied, the processability of the diene-based graft polymer may be further improved.

An amount of the vinyl cyanide-based monomer unit in the diene-based graft polymer may be 1.0 to 30.0 wt%, preferably 5.0 to 25.0 wt%. When this condition is satisfied, the chemical resistance of the diene-based graft polymer may be further improved.

A grafting rate of the diene-based graft polymer may be 10.0 to 50.0%, preferably 20.0 to 45.0%. When this condition is satisfied, excellent impact resistance and tensile properties may be achieved.

A weight-average molecular weight of the shell in the diene-based graft polymer may be 50,000 to 130,000 g/mol, preferably 60,000 to 100,000 g/mol. When this condition is satisfied, excellent impact resistance and tensile properties may be achieved.

An amount of the diene-based graft polymer may be 10.0 to 40.0 parts by weight, preferably 15.0 to 35.0 parts by weight, more preferably 20.0 to 30.0 parts by weight, based on 100 parts by weight of the base resin. When this condition is satisfied, the impact resistance, tensile force, and stress of the thermoplastic resin composition may be further improved.

### (2) Vinyl-based non-grafted polymer

A vinyl-based non-grafted polymer is a component that improves the processability of the thermoplastic resin composition.

The vinyl-based non-grafted polymer includes an aromatic vinyl-based monomer unit and a vinyl cyanide-based monomer unit and may be preferably a binary polymer composed of an aromatic vinyl-based monomer unit and a vinyl cyanide-based monomer unit.

The vinyl-based non-grafted polymer may include the aromatic vinyl-based monomer unit and the vinyl cyanide-based monomer unit in a weight ratio of 90:10 to 60:40, preferably 85:15 to 65:35. When this condition is satisfied, a vinyl-based non-grafted polymer with improved processability and chemical resistance may be prepared.

The vinyl-based non-grafted polymer may be included as the balance so that a total amount of the components of the base resin becomes 100 parts by weight.

### (3) Maleimide-based non-grafted polymer

A maleimide-based non-grafted polymer is a component that improves the heat resistance of the thermoplastic resin composition.

The maleimide-based non-grafted polymer includes a maleimide-based monomer unit, an aromatic vinyl-based monomer unit, and a maleic acid-based monomer unit, and may be preferably a terpolymer composed of a maleimide-based monomer unit, an aromatic vinyl-based monomer unit, and a maleic acid-based monomer unit, and more preferably an N-phenylmaleimide/styrene/maleic anhydride terpolymer.

The maleimide-based non-grafted polymer may include 40.0 to 60.0 wt% of the maleimide-based monomer units, preferably 45.0 to 55.0 wt%. When this condition is satisfied, heat resistance may be improved.

The maleimide-based non-grafted polymer may include 35.0 to 55.0 wt% of the aromatic vinyl-based monomer units, preferably 40.0 to 50.0 wt%. When this condition is satisfied, impact resistance may be improved.

The maleimide-based non-grafted polymer may include 0.01 to 10.0 wt% of the maleic acid-based monomer units, preferably 0.50 to 7.0 wt%. When this condition is satisfied, heat resistance may be improved.

A glass transition temperature of the maleimide-based non-grafted polymer may be 175 to 210 °C, preferably 180 to 205 °C, more preferably 182 to 320 °C. When this condition is satisfied, the heat resistance of the thermoplastic resin composition may be further improved.

A weight-average molecular weight of the maleimide-based non-grafted polymer may be 75,000 to 150,000 g/mol, preferably 80,000 to 130,000 g/mol. When this condition is satisfied, the impact resistance, processability, and heat resistance of the thermoplastic resin composition may be improved.

An amount of the maleimide-based non-grafted polymer may be 10.0 to 50.0 parts by weight, preferably 15.0 to 45.0 parts by weight, more preferably 20.0 to 40.0 parts by weight, based on 100 parts by weight of the base resin. When this condition is satisfied, the heat resistance of the thermoplastic resin composition may be significantly improved while a reduction in impact resistance and processability is minimized.

### 2) Additive

### (1) Olefin-based non-grafted polymer

An olefin-based non-grafted polymer is a component that improves the chemical resistance of the thermoplastic resin composition.

The olefin-based non-grafted polymer includes an olefin-based monomer unit, a (meth)acrylate-based monomer unit, and a maleic acid-based monomer unit, and may be preferably a terpolymer composed of an olefin-based monomer unit, a (meth)acrylate-based monomer unit, and a maleic acid-based monomer unit, more preferably an ethylene/ethyl acrylate/maleic anhydride polymer.

An amount of the olefin-based monomer unit may be 60.0 to 80.0 wt%, preferably 65.0 to 75.0 wt% based on a total weight of the olefin-based non-grafted polymer. When this condition is satisfied, the chemical resistance of the thermoplastic resin composition may be improved.

An amount of the (meth)acrylate-based monomer unit may be 19.0 to 39.0 wt%, preferably 24.0 to 34.0 wt% based on a total weight of the olefin-based non-grafted polymer. When this condition is satisfied, the chemical resistance of the thermoplastic resin composition may be improved.

An amount of the maleic acid-based monomer unit may be 0.1 to 5.0 wt%, preferably 0.1 to 3.0 wt% based on a total weight of the olefin-based non-grafted polymer. When this condition is satisfied, chemical resistance may be improved while maintaining basic physical properties, such as impact resistance and the like, of the thermoplastic resin composition.

An amount of the olefin-based non-grafted polymer may be 0.5 to 5.0 parts by weight, preferably 0.5 to 3.0 parts by weight based on 100 parts by weight of the base resin. When this condition is satisfied, chemical resistance may be improved while a reduction in impact resistance, processability, and heat resistance is minimized.

Hereinafter, examples of the present invention will be described in detail so that those skilled in the art can easily carry out the present invention. However, the present invention may be embodied in several different forms and is not limited to the examples described herein.

### Examples and Comparative Examples

Descriptions of the components used in the following examples and comparative examples are as follows.

### 1) Base resin

(1) Diene-based graft polymer: including 60.0 wt% of a butadiene rubber polymer having an average particle diameter of 300 nm and a shell including 30.0 wt% of styrene units and 10.0 wt% of acrylonitrile units that are grafted to the butadiene rubber polymer, and a weight-average molecular weight of the shell is 80,000 g/mol, and a grafting rate is 35%.
(2) Vinyl-based non-grafted polymer: Styrene/acrylonitrile binary polymer with a weight-average molecular weight of 130,000 g/mol, prepared by polymerization of 73 wt% of styrene and 27 wt% of acrylonitrile
(3) Maleimide-based non-grafted polymer: N-phenylmaleimide/styrene/maleic anhydride terpolymer having a weight-average molecular weight of 125,000 g/mol and a glass transition temperature of 185 °C, prepared by polymerization of 52.0 wt% of N-phenylmaleimide, 46.0 wt% of styrene, and 2.0 wt% of maleic anhydride

### 2) Additive

(1) Olefin-based non-grafted polymer: Ethylene/ethyl acrylate/maleic anhydride terpolymer with a melting point of 79 °C, prepared by polymerization of 69.7 wt% of ethylene, 29 wt% of ethyl acrylate, and 1.3 wt% of maleic anhydride
(2) Ethylene/methyl acrylate binary polymer: having a melting point of 91 °C and prepared by polymerization of 76 wt% of ethylene and 24 wt% of methyl acrylate

The components described above were mixed in amounts shown in Tables 1 and 2 below and stirred to prepare thermoplastic resin compositions.

### Experimental Example 1

Each thermoplastic resin composition of the examples and comparative examples was extruded to prepare a pellet, and the pellet was evaluated using the method described below and results thereof are shown in Tables 1 and 2 below.
(1) Melt flow index (g/10 min): Melt flow index was measured according to ASTM D1238 under conditions of 220 °C and 10 kg. In the present invention, processability was judged to be excellent when the melt flow index was 4.0 g/10 min or more.

### Experimental Example 2

Each thermoplastic resin composition of the examples and comparative examples was extruded and injection-molded to prepare a sample, and the sample was evaluated using the methods described below and results thereof are shown in Tables 1 to 4 below.
(2) IZOD impact strength (kg·cm/cm, 1/4 inch): IZOD impact strength was measured according to ASTM D256. In the present invention, impact resistance was judged to be excellent when the IZOD impact strength was 10.0 kg·cm/cm or more.
(3) Heat deflection temperature (°C): Heat deflection temperature was measured according to ASTM D648 under unannealed conditions. In the present invention, heat resistance was judged to be excellent when the heat deflection temperature was 90.0 °C or higher.
(4) Chemical resistance: Each sample (200 mm×12.7 mm×3.2 mm) was fixed to a curvature jig with a stress of 1.1%, and 1 cc of thinner (T803 commercially available from NOROO BEE Chemical Co., Ltd) was applied, and the time for cracks to occur of each sample was measured.
∘: No cracks occur within 600 seconds after applying a thinner.
×: Cracks occur within 600 seconds after applying a thinner.

**[Table 1]**

| Classification | | Example 1 | Example 2 | Example 3 | Example 4 | Example 5 | Example 6 |
|---|---|---|---|---|---|---|---|
| Base resin (parts by weight) | Diene-based graft polymer | 25.0 | 25.0 | 25.0 | 25.0 | 25.0 | 25.0 |
| | Vinyl-based non-grafted polymer | 75.0 | 55.0 | 55.0 | 35.0 | 35.0 | 35.0 |
| | Maleimide-based non-grafted polymer | 0.0 | 20.0 | 20.0 | 40.0 | 40.0 | 40.0 |
| Additive (parts by weight) | Olefin-based non-grafted polymer | 3.0 | 3.0 | 5.0 | 0.5 | 1.0 | 3.0 |
| Melt flow index (g/10 min) | | 19.1 | 10.0 | 10.9 | 4.7 | 4.7 | 4.5 |
| IZOD impact strength (kg·cm/cm) | | 25.0 | 16.1 | 17.0 | 11.7 | 11.4 | 11.2 |
| Heat deflection temperature (°C) | | 90.5 | 100.2 | 99.0 | 111.8 | 111.9 | 112.0 |
| Chemical resistance | | ○ | ○ | ○ | ○ | ○ | ○ |

**[Table 2]**

| Classification | | Comparative Example 1 | Comparative Example 2 | Comparative Example 3 | Comparative Example 4 |
|---|---|---|---|---|---|
| Base resin (parts by | Diene-based graft polymer | 25.0 | 25.0 | 25.0 | 25.0 |
| weight) | Vinyl-based non-grafted polymer | 75.0 | 35.0 | 35.0 | 35.0 |
| | Maleimide-based non-grafted polymer | 0.0 | 40.0 | 40.0 | 40.0 |
| Additive (parts by weight) | Olefin-based non-grafted polymer | 0.0 | 0.0 | 0.0 | 0.0 |
| | Ethylene/methyl acrylate binary polymer | 0.0 | 0.0 | 1.0 | 3.0 |
| Melt flow index (g/10 min) | | 19.5 | 4.2 | 4.5 | 4.2 |
| IZOD impact strength (kg·cm/cm) | | 24.7 | 10.9 | 10.8 | 10.6 |
| Heat deflection temperature (°C) | | 90.1 | 112.8 | 112.4 | 112.2 |
| Chemical resistance | | × | × | × | × |

Referring to Tables 1 and 2, the thermoplastic resin composition of Example **1,** which included a diene-based graft polymer and a vinyl-based non-grafted polymer as a base resin and included an olefin-based non-grafted polymer as an additive, had an excellent melt flow index, excellent impact strength and chemical resistance, and an adequate level of heat deflection temperature. Examples 2 to 6, which included a diene-based graft polymer, a vinyl-based non-grafted polymer, and a maleimide-based non-grafted polymer as a base resin and included an olefin-based non-grafted polymer as an additive, had an excellent melt flow index, excellent impact strength and chemical resistance, and high heat deflection temperatures.

When comparing Example 2 and Example 3, it can be seen that as the content of the olefin-based non-grafted polymer increased, the melt flow index and impact strength were improved, but the heat deflection temperature was somewhat lowered.

When comparing Example 1, Example 2, and Example 6, it can be seen that the maleimide-based non-grafted polymer increased the heat deflection temperature but reduced the melt flow index and impact strength.

When comparing Examples 4 to 6, it can be seen that the content of the olefin-based non-grafted polymer affected the heat deflection temperature.

When comparing Example 1 and Comparative Example 1, Example 1 had remarkable chemical resistance compared to Comparative Example 1, which did not include an olefin-based non-grafted polymer.

When comparing Examples 4 to 6 and Comparative Example 2, Examples 4 to 6 had excellent impact strength and chemical resistance but had somewhat reduced heat deflection temperatures compared to Comparative Example 2, which did not include an olefin-based non-grafted polymer.

When comparing Example 5 and Comparative Example 3, Example 5 had remarkably high impact strength and chemical resistance compared to Comparative Example 3, which included an ethylene/methyl acrylate binary polymer instead of an olefin-based non-grafted polymer.

When comparing Example 6 and Comparative Example 4, Example 5 had remarkably high impact strength and chemical resistance compared to Comparative Example 4, which included an ethylene/methyl acrylate binary polymer instead of an olefin-based non-grafted polymer.

## Claims

1. A thermoplastic resin composition comprising:
a base resin including a diene-based graft polymer and a vinyl-based non-grafted polymer including an aromatic vinyl-based monomer unit and a vinyl cyanide-based monomer unit; and
an additive including an olefin-based non-grafted polymer including an olefin-based monomer unit, a (meth)acrylate-based monomer unit, and a maleic acid-based monomer unit.

2. The thermoplastic resin composition of claim 1, comprising 0.5 to 5.0 parts by weight of the olefin-based non-grafted polymer based on 100 parts by weight of the base resin.

3. The thermoplastic resin composition of claim 1, wherein the olefin-based non-grafted polymer is a terpolymer composed of an olefin-based monomer unit, a (meth)acrylate-based monomer unit, and a maleic acid-based monomer unit.

4. The thermoplastic resin composition of claim 1, wherein the olefin-based non-grafted polymer is an ethylene/ethyl acrylate/maleic anhydride terpolymer.

5. The thermoplastic resin composition of claim 1, wherein the diene-based graft polymer includes a diene-based rubber polymer and a shell including an aromatic vinyl-based monomer unit and a vinyl cyanide-based monomer unit that are grafted to the diene-based rubber polymer.

6. The thermoplastic resin composition of claim 1, comprising 10.0 to 40.0 parts by weight of the diene-based graft polymer based on 100 parts by weight of the base resin.

7. The thermoplastic resin composition of claim 1, wherein the base resin includes a maleimide-based non-grafted polymer including a maleimide-based monomer unit, an aromatic vinyl-based monomer unit, and a maleic acid-based monomer unit.

8. The thermoplastic resin composition of claim 7, comprising 10.0 to 50.0 parts by weight of the maleimide-based non-grafted polymer based on 100 parts by weight of the base resin.

9. The thermoplastic resin composition of claim 7, wherein the maleimide-based non-grafted polymer is a terpolymer composed of a maleimide-based monomer unit, an aromatic vinyl-based monomer unit, and a maleic acid-based monomer unit.

10. The thermoplastic resin composition of claim 7, wherein the maleimide-based non-grafted polymer is an N-phenylmaleimide/styrene/maleic anhydride polymer.
